(19) **Europäisches Patentamt / European Patent Office / Office européen des brevets**

(11) **EP 4 733 347 A1**

(12) **EUROPEAN PATENT APPLICATION**
published in accordance with Art. 153(4) EPC

(43) Date of publication:
**29.04.2026 Bulletin 2026/18**

(21) Application number: **24825783.4**

(22) Date of filing: **10.06.2024**

(51) International Patent Classification (IPC):
*C08J 5/18* (2006.01)    *B32B 27/36* (2006.01)
*C08L 67/04* (2006.01)    *C08L 101/16* (2006.01)

(52) Cooperative Patent Classification (CPC):
**B32B 27/36; C08J 5/18; C08L 67/04; C08L 101/16**

(86) International application number:
**PCT/JP2024/021070**

(87) International publication number:
**WO 2024/262378 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023 JP 2023101571**

(71) Applicant: **Kaneka Corporation**
**Osaka-shi, Osaka 530-8288 (JP)**

(72) Inventors:
- **KAMIKARIYA, Naoya**
  **Osaka 566-0072 (JP)**
- **KITAYAMA, Fuminobu**
  **Settsu-shi, Osaka 566-0072 (JP)**

(74) Representative: **Vossius & Partner**
**Patentanwälte Rechtsanwälte mbB**
**Siebertstraße 3**
**81675 München (DE)**

(54) **STRETCHED FILM**

(57) A stretched film contains a poly(3-hydroxyalkanoate) resin (A) and a polylactic acid resin (B). The poly(3-hydroxyalkanoate) resin (A) includes a copolymer (A-1) that contains 3-hydroxybutyrate units and other hydroxyalkanoate units, in which the proportion of the other hydroxyalkanoate units is from 10 to less than 24 mol%, and that has a weight-average molecular weight of $70 \times 10^4$ or more. The amount of the copolymer (A-1) is from more than 20 to 75 wt% based on the total weight of the poly(3-hydroxyalkanoate) resin (A) and the polylactic acid resin (B).

## Description

## Technical Field

The present invention relates to a stretched film containing a poly(3-hydroxyalkanoate) resin.

## Background Art

Separate collection and composting of raw garbage have recently been promoted, especially in Europe, and there is a demand for plastic products that are compostable together with raw garbage. In addition, plastics with marine degradability are regarded as promising materials to solve the problem of plastic-induced marine pollution.

Poly(3-hydroxyalkanoate) resins, typified by poly(3-hydroxybutyrate-co-3-hydroxyhexanoate), have drawn attention as plastic materials having compostability and marine degradability.

Film stretching is known as a technique for producing thin, high-strength films. For example, in stretched film production from a general-purpose resin such as polypropylene, a molten resin is cooled and solidified on a cast roll to form a web, then the web is preheated to a temperature at which the web can be stretched, and the preheated web is stretched. With this method, a stretched film can be continuously produced with high productivity.

However, poly(3-hydroxyalkanoate) resins are known as materials that are difficult to stretch due to their characteristics. To produce poly(3-hydroxyalkanoate) resin-containing stretched films with high productivity, various techniques have been investigated.

For example, Patent Literature 1 describes producing a biaxially-stretched film with high productivity. The film production consists of: melting and molding a film raw material containing a poly(3-hydroxybutyrate) resin into a film using an extruder; and then stretching the film continuously at a stretch ratio of 1.1 or more in both the MD and TD directions.

Patent Literature 2 also describes the production of a stretched film, and the film production consists of: melting a film raw material containing a poly(3-hydroxybutyrate) resin; extruding the molten film raw material onto a cast roll; then separating the film from the cast roll under conditions where the film temperature is from 0 to 50°C; and subsequently stretching the film in the MD direction under conditions where the film temperature is from 10 to 65°C. In this method, a high stretch ratio is achieved by controlling the film temperature within a relatively low temperature range and thus controlling the crystallinity of the poly(3-hydroxybutyrate) resin to a relatively low level.

## Citation List

## Patent Literature

PTL 1: Japanese Laid-Open Patent Application Publication No. 2022-62759
PTL 2: Japanese Laid-Open Patent Application Publication No. 2023-73820

## Summary of Invention

## Technical Problem

With the method described in Patent Literature 1, a biaxially-stretched film containing a poly(3-hydroxybutyrate) resin can be produced. However, the stretch ratio achieved in Examples is at most from 1.5 to 1.6.

In the method described in Patent Literature 2, a high stretch ratio is achieved by controlling the temperature conditions during stretched film production. However, the film temperature during production needs to be controlled within a relatively low temperature range around room temperature, and it is difficult to stabilize the production environment in such a temperature range. Accordingly, continuous production of stretched films is difficult to carry out stably.

As described above, Patent Literatures 1 and 2 describe stretching a film containing a poly(3-hydroxyalkanoate) resin while controlling the conditions for stretched film production, but do not give any adequate discussion on how to enhance film stretchability by adjusting the composition of the poly(3-hydroxyalkanoate) resin-containing film raw material.

In view of the above circumstances, the present invention aims to provide a poly(3-hydroxyalkanoate) resin-containing stretched film with improved stretchability.

**Solution to Problem**

As a result of intensive studies with the goal of solving the above problem, the present inventors have found that a film containing a poly(3-hydroxyalkanoate) resin can exhibit markedly improved stretchability when the poly(3-hydroxyalkanoate) resin contains a poly(3-hydroxybutyrate) copolymer containing specific proportions of constituent monomers and having a specific weight-average molecular weight and the film is formed from a blend of the copolymer with a polylactic acid resin. Based on this finding, the inventors have completed the present invention.

Specifically, the present invention relates to a stretched film containing: a poly(3-hydroxyalkanoate) resin (A); and a polylactic acid resin (B), wherein the poly(3-hydroxyalkanoate) resin (A) contains a copolymer (A-1) that contains 3-hydroxybutyrate units and other hydroxyalkanoate units, in which a proportion of the other hydroxyalkanoate units is from 10 to less than 24 mol%, and that has a weight-average molecular weight of $70 \times 10^4$ or more, and an amount of the copolymer (A-1) is from more than 20 to 75 wt% based on a total weight of the poly(3-hydroxyalkanoate) resin (A) and the polylactic acid resin (B).

The present invention also relates to a laminate including: the stretched film; and a layer located on at least one side of the stretched film, the layer containing a poly(3-hydroxyalkanoate) resin (C).

**Advantageous Effects of Invention**

The present invention can provide a poly(3-hydroxyalkanoate) resin-containing stretched film with improved stretchability.

In the present invention, the stretchability is improved by virtue of the composition of the film raw material. Accordingly, there is no need to employ specific temperature conditions as described in Patent Literature 2, and film stretching can be accomplished under temperature conditions that are easier to control and stabilize than the temperature conditions of Patent Literature 2.

Thus, the production of the poly(3-hydroxyalkanoate) resin-containing stretched film can be carried out continuously and stably. As a result, the quality of the stretched film can be stabilized; in particular, a long stretched film can be produced stably. High stretch ratios can also be achieved.

According to a preferred aspect of the present invention, a uniaxially stretched film stretched in the MD direction, or a biaxially-stretched film stretched in both the MD and TD directions, can be produced, and a high stretch ratio can be achieved in each direction.

**Description of Embodiments**

Hereinafter, an embodiment of the present invention will be described. The present invention is not limited to the embodiment described below.

The present embodiment relates to a stretched film containing a poly(3-hydroxyalkanoate) resin (A) and a polylactic acid resin (B). Hereinafter, a "stretched film" may be simply referred to as a "film".

[Poly(3-Hydroxyalkanoate) Resin (A)]

The poly(3-hydroxyalkanoate) resin (A) may be a single poly(3-hydroxyalkanoate) resin or may be a mixture of two or more poly(3-hydroxyalkanoate) resins. To reliably achieve both high film strength and high film stretchability, the poly(3-hydroxyalkanoate) resin (A) is preferably a mixture of at least two poly(3-hydroxyalkanoate) resins differing in the types and/or proportions of the constituent monomers.

The poly(3-hydroxyalkanoate) resin (A) is preferably a polymer containing 3-hydroxyalkanoate units, in particular a polymer containing units represented by the following formula (1).

$$[-CHR-CH_2-CO-O-] \qquad (1)$$

In the formula (1), R is an alkyl group represented by $C_pH_{2p+1}$, and p is an integer from 1 to 15. Examples of R include linear or branched alkyl groups such as methyl, ethyl, propyl, methylpropyl, butyl, isobutyl, *t*-butyl, pentyl, and hexyl groups. The integer p is preferably from 1 to 10 and more preferably from 1 to 8.

The poly(3-hydroxyalkanoate) resin (A) is particularly preferably a microbially produced poly(3-hydroxyalkanoate) resin. In the microbially produced poly(3-hydroxyalkanoate) resin, all of the 3-hydroxyalkanoate units are contained as (*R*)-3-hydroxyalkanoate units.

The poly(3-hydroxyalkanoate) resin (A) preferably contains 50 mol% or more, more preferably 60 mol% or more, even more preferably 70 mol% or more, of 3-hydroxyalkanoate units (in particular, the units represented by the formula (1)) in the total structural units. The poly(3-hydroxyalkanoate) resin (A) may contain only one type or two or more types of 3-hydroxyalkanoate units as polymer structural units, or may contain other units (such as 4-hydroxyalkanoate units) in addition to one type or two or more types of 3-hydroxyalkanoate units.

The poly(3-hydroxyalkanoate) resin (A) is preferably a homopolymer or copolymer containing 3-hydroxybutyrate (hereinafter also referred to as 3HB) units. Such homopolymers and copolymers may hereinafter be collectively referred to as "poly(3-hydroxybutyrate) resins". In particular, all of the 3-hydroxybutyrate units are preferably (R)-3-hydroxybutyrate units. It is also preferable that the poly(3-hydroxyalkanoate) resin (A) include a copolymer of 3-hydroxybutyrate units and other hydroxyalkanoate units.

Specific examples of poly(3-hydroxybutyrate) resins include poly(3-hydroxybutyrate), poly(3-hydroxybutyrate-co-3-hydroxypropionate), poly(3-hydroxybutyrate-co-3-hydroxyvalerate) abbreviated as P3HB3HV, poly(3-hydroxybutyrate-co-3-hydroxyvalerate-3-hydroxyhexanoate), poly(3-hydroxybutyrate-co-3-hydroxyhexanoate) abbreviated as P3HB3HH, poly(3-hydroxybutyrate-co-3-hydroxyheptanoate), poly(3-hydroxybutyrate-co-3-hydroxyoctanoate), poly(3-hydroxybutyrate-co-3-hydroxynonanoate), poly(3-hydroxybutyrate-co-3-hydroxydecanoate), poly(3-hydroxybutyrate-co-3-hydroxyundecanoate), and poly(3-hydroxybutyrate-co-4-hydroxybutyrate) abbreviated as P3HB4HB. In particular, poly(3-hydroxybutyrate-co-3-hydroxyhexanoate) or poly(3-hydroxybutyrate-co-4-hydroxybutyrate) is preferred in terms of film properties such as stretchability and mechanical properties.

Poly(3-hydroxybutyrate-co-3-hydroxyhexanoate) is particularly preferred for the following reasons: its melting point and crystallinity can be changed by varying the proportions of the repeating units, and thus its physical properties such as Young's modulus and heat resistance can be changed and controlled to levels intermediate between those of polypropylene and polyethylene; and poly(3-hydroxybutyrate-co-3-hydroxyhexanoate) is a plastic that is easy to industrially produce and useful in terms of physical properties. Poly(3-hydroxybutyrate) resins are readily thermally decomposed under heating at 180°C or higher and, in particular, poly(3-hydroxybutyrate-co-3-hydroxyhexanoate) can have a low melting point and be moldable at low temperatures. Poly(3-hydroxybutyrate-co-3-hydroxyhexanoate) is preferred also in this respect.

Examples of commercially-available poly(3-hydroxybutyrate-co-3-hydroxyhexanoate) include "Kaneka Biodegradable Polymer Green Planet™" of Kaneka Corporation.

When the poly(3-hydroxyalkanoate) resin (A) includes a copolymer of 3-hydroxybutyrate units and other hydroxyalkanoate units, the average ratio between the 3-hydroxybutyrate units and the other hydroxyalkanoate units (3-hydroxybutyrate units/other hydroxyalkanoate units) in the total monomer units constituting the poly(3-hydroxyalkanoate) resin (A) is preferably from 99/1 to 80/20 (mol%/mol%), more preferably from 97/3 to 82/18 (mol%/mol%), and even more preferably from 95/5 to 85/15 (mol%/mol%) in order to achieve both high film strength and high film stretchability.

The average ratio between different monomer units in the total monomer units constituting the poly(3-hydroxyalkanoate) resin (A) can be determined by a method known to those skilled in the art, such as the method described in paragraph [0047] of WO 2013/147139 A1. The "average ratio" refers to the molar ratio between different monomer units in the total monomer units constituting the poly(3-hydroxyalkanoate) resin (A). When the poly(3-hydroxyalkanoate) resin (A) is a mixture of two or more poly(3-hydroxyalkanoate) resins, the average ratio refers to the molar ratio between different monomer units contained in the total mixture.

As stated above, the poly(3-hydroxyalkanoate) resin (A) may be a mixture of at least two poly(3-hydroxyalkanoate) resins differing in the types and/or proportions of the constituent monomers. In this case, a combination of at least one high-crystallinity poly(3-hydroxyalkanoate) resin and at least one low-crystallinity poly(3-hydroxyalkanoate) resin can be used.

In general, high-crystallinity poly(3-hydroxyalkanoate) resins are superior in terms of productivity, but have low mechanical strength, while low-crystallinity poly(3-hydroxyalkanoate) resins have good mechanical properties although being inferior in terms of productivity. The combined use of high-crystallinity and low-crystallinity poly(3-hydroxyalkanoate) resins can further improve film strength and film productivity.

The proportion of 3-hydroxybutyrate units in the high-crystallinity poly(3-hydroxyalkanoate) resin is preferably higher than the average proportion of 3-hydroxybutyrate units in the total monomer units constituting the poly(3-hydroxyalkanoate) resin (A). The proportion of 3-hydroxybutyrate units in the low-crystallinity poly(3-hydroxyalkanoate) resin is preferably lower than the average proportion of 3-hydroxybutyrate units in the total monomer units constituting the poly(3-hydroxyalkanoate) resin (A).

In the present embodiment, the poly(3-hydroxyalkanoate) resin (A) contains a copolymer (A-1) that contains 3-hydroxybutyrate units and other hydroxyalkanoate units, in which the proportion of the other hydroxyalkanoate units is from 10 to less than 24 mol%, and that has a weight-average molecular weight of $70 \times 10^4$ or more. By using the copolymer (A-1), which has a moderate level of crystallinity and a high molecular weight, in combination with the polylactic acid resin (B), the stretchability of the poly(3-hydroxyalkanoate) resin-containing film can be enhanced.

In the copolymer (A-1), the proportion of the other hydroxyalkanoate units is from 10 to less than 24 mol%. The proportion is preferably from 10 to 20 mol%, more preferably from 10 to 17 mol%, and even more preferably from 10 to 14 mol%.

The copolymer (A-1) is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

The weight-average molecular weight of the copolymer (A-1) is $70 \times 10^4$ or more, and preferably $75 \times 10^4$ or more. The upper limit of the weight-average molecular weight is not limited to a particular value. In terms of productivity, the weight-average molecular weight is preferably up to $200 \times 10^4$, more preferably up to $150 \times 10^4$, and even more preferably up to $100 \times 10^4$.

The weight-average molecular weight of a poly(3-hydroxyalkanoate) resin or copolymer can be measured as a polystyrene-equivalent molecular weight by gel permeation chromatography (HPLC GPC system manufactured by Shimadzu Corporation) using a chloroform solution of the resin or copolymer. The columns used in the gel permeation chromatography may be any columns suitable for weight-average molecular weight measurement. The same applies to the following description.

In the stretched film according to the present embodiment, the amount of the copolymer (A-1) is from more than 20 to 75 wt% based on the total weight of the poly(3-hydroxyalkanoate) resin (A) and the polylactic acid resin (B) in order to ensure a good balance of film stretchability, film productivity, and film strength. Thanks to this limitation on the amount of the copolymer (A-1), the film can be produced with high productivity while the stretchability-improving effect is obtained by incorporation of the copolymer (A-1). In terms of film stretchability, the amount of the copolymer (A-1) is preferably at least 25 wt% and more preferably at least 30 wt%. In terms of film productivity, the amount of the copolymer (A-1) is preferably up to 60 wt%, more preferably up to 50 wt%, and even more preferably up to 45 wt%.

Preferably, the poly(3-hydroxyalkanoate) resin (A) further contains, in addition to the copolymer (A-1), a copolymer (A-2) that contains 3-hydroxybutyrate units and other hydroxyalkanoate units and in which the proportion of the other hydroxyalkanoate units is from 1 to less than 10 mol%. The use of such a copolymer (A-2) having high crystallinity in combination with the copolymer (A-1) makes it easier to improve film stretchability.

In the copolymer (A-2), the proportion of the other hydroxyalkanoate units is preferably from 3 to 9 mol%, more preferably from 4 to 8 mol%, and even more preferably from 5 to 7 mol%.

The copolymer (A-2) is preferably poly(3-hydroxybutyrate-co-3-hydroxyhexanoate) or poly(3-hydroxybutyrate-co-4-hydroxybutyrate), and particularly preferably poly(3-hydroxybutyrate-co-3-hydroxyhexanoate).

The weight-average molecular weight of the copolymer (A-2) is not limited to a particular range, but is preferably lower than the weight-average molecular weight of the copolymer (A-1). Specifically, the weight-average molecular weight of the copolymer (A-2) is preferably less than $70 \times 10^4$ and more preferably $65 \times 10^4$ or less. The lower limit of the weight-average molecular weight of the copolymer (A-2) is not limited to a particular value, but the weight-average molecular weight is preferably at least $20 \times 10^4$, more preferably at least $30 \times 10^4$, even more preferably at least $40 \times 10^4$, and particularly preferably at least $50 \times 10^4$.

When the resin (A) includes the copolymers (A-1) and (A-2), it is preferable in terms of film stretchability, film productivity, and film physical properties that the weight ratio of the copolymer (A-1) to the copolymer (A-2) (A-1/A-2) be from 10/90 to 80/20. The weight ratio is more preferably from 20/80 to 70/30, even more preferably from 30/70 to 60/40, still more preferably from 30/70 to 50/50, and particularly preferably from 35/65 to 45/55.

The method for obtaining a blend of two or more poly(3-hydroxyalkanoate) resins is not limited to a particular technique. A blend of two or more poly(3-hydroxyalkanoate) resins may be obtained by microbial production or chemical synthesis. Alternatively, a blend of two or more resins may be obtained by melting and kneading the resins using a device such as an extruder, a kneader, a Banbury mixer, or a roll mill, or may be obtained by dissolving and mixing the resins in a solvent and drying the resulting mixture.

The weight-average molecular weight of the total poly(3-hydroxyalkanoate) resin (A) is not limited to a particular range, but is preferably from $20 \times 10^4$ to $200 \times 10^4$, more preferably from $30 \times 10^4$ to $150 \times 10^4$, and even more preferably from $40 \times 10^4$ to $100 \times 10^4$ in order to achieve both high film strength and high film stretchability.

The method for producing poly(3-hydroxyalkanoate) resins is not limited to a particular technique, and may be a production method using chemical synthesis or a microbial production method. A microbial production method is preferred. The microbial production method used can be any known method. Known examples of bacteria that produce copolymers of 3-hydroxybutyrate with other hydroxyalkanoates include *Aeromonas caviae* which is a P3HB3HV- and P3HB3HH-producing bacterium and *Alcaligenes eutrophus* which is a P3HB4HB-producing bacterium. In particular, in order to increase the P3HB3HH productivity, *Alcaligenes eutrophus* AC32 (FERM BP-6038; see T. Fukui, Y. Doi, J. Bacteriol., 179, pp. 4821-4830 (1997)) incorporating a P3HA synthase gene is more preferred. Such a microorganism is cultured under suitable conditions to allow the microorganism to accumulate P3HB3HH in its cells, and the microbial cells accumulating P3HB3HH are used. Instead of the above microorganisms, a genetically modified microorganism incorporating any suitable poly(3-hydroxyalkanoate) resin synthesis-related gene may be used depending on the poly(3-hydroxyalkanoate) resin to be produced. The culture conditions including the type of the substrate may be optimized depending on the poly(3-hydroxyalkanoate) resin to be produced.

An unmodified poly(3-hydroxyalkanoate) resin can be used as the poly(3-hydroxyalkanoate) resin (A). Alternatively, a resin obtained by modifying an unmodified poly(3-hydroxyalkanoate) resin with a resin-reactive material such as a peroxide (hereinafter referred to as a "modifying material") may be used.

When a modified resin is used as a film raw material, the modified resin may be first obtained by a reaction of a resin and a modifying material and then molded into a film. Alternatively, a resin may be mixed with a modifying material, and they may be reacted during film molding. When a resin is reacted with a modifying material, all of the resin may be reacted at once with the modifying material. Alternatively, part of the resin may be reacted with the modifying material to obtain a modified resin, and then the rest of the unmodified resin may be added to the modified resin.

The modifying material is not limited to a particular compound, and may be any compound reactive with poly(3-hydroxyalkanoate) resins. In terms of handleability and ease of control of the reaction with poly(3-hydroxyalkanoate) resins, the use of an organic peroxide is preferred. The organic compound used may be any suitable known compound.

In order to achieve both high film stretchability and high film biodegradability (in particular, biodegradability in compositing and marine degradability), the amount of the poly(3-hydroxyalkanoate) resin (A) in the stretched film according to the present embodiment is preferably from 50 to 90 wt% based on the total weight of the poly(3-hydroxyalkanoate) resin (A) and the polylactic acid resin (B). In order to enhance biodegradability, the amount of the poly(3-hydroxyalkanoate) resin (A) is more preferably at least 60 wt%, even more preferably at least 70 wt%, still more preferably at least 75 wt%, and particularly preferably at least 80 wt%. In order to enhance stretchability, the amount of the poly(3-hydroxyalkanoate) resin (A) is more preferably up to 85 wt% and even more preferably up to 80 wt%.

[Polylactic Acid Resin (B)]

The polylactic acid resin (B) is a polyester containing lactic acid as a constituent monomer. Generally, polylactic acid resins have a glass transition temperature of around 60°C and, when rapidly cooled from a molten state, they do not readily crystallize but become amorphous. Thus, incorporation of the polylactic acid resin (B) into a film allows for easy softening of the film. Accordingly, the use of the polylactic acid resin (B) in combination with the copolymer (A-1) can enhance the stretchability of a poly(3-hydroxyalkanoate) resin-containing film. This makes it possible to prevent breakage of the film during stretching and obtain a high-quality stretched film without uneven stretching. In addition, film stretching can be carried out continuously and stably even under temperature conditions outside the specific temperature range taught in Patent Literature 2. High stretch ratios can also be achieved.

The polylactic acid resin (B) is preferably a homopolymer of lactic acid, but may contain a small amount of monomer other than lactic acid.

The lactic acid of the polylactic acid resin (B) may be either L-lactic acid or D-lactic acid or may be a combination of both. In the latter case, the ratio between L-lactic acid and D-lactic acid is not limited to a particular range.

The polylactic acid resin (B) may be a poly(L-lactic acid) resin, a poly(D-lactic acid) resin, or a poly(DL-lactic acid) resin. A blend of these resins may be used.

Examples of the other monomer which may be contained in the polylactic acid resin (B) include aliphatic hydroxycarboxylic acids other than lactic acid, aliphatic polyhydric alcohols, aliphatic polycarboxylic acids, and polyfunctional polysaccharides.

When the polylactic acid resin (B) is a copolymer of lactic acid and another monomer, it is preferable in terms of crystallinity that the proportion of the other monomer in the total monomers contained in the polylactic acid resin (B) be from about 0 to about 3 mol%. The proportion is more preferably from 0 to 2 mol%.

The polylactic acid resin (B) may be a crystalline polylactic acid resin or an amorphous polylactic acid resin. In terms of heat resistance against shrinkage caused by heating during a post-processing step such as printing or vapor deposition, the use of a crystalline polylactic acid resin is preferred. Among crystalline polylactic acid resins, a polylactic acid resin is particularly preferred which exhibits a melting point peak with a peak temperature below 170°C in differential scanning calorimetry.

The peak temperature of the melting point peak of the polylactic acid resin (B) (hereinafter also referred to as the "melting point peak temperature") is preferably 165°C or lower and more preferably 160°C or lower in order to enhance film stretchability and film strength. The peak temperature is preferably at least 120°C, more preferably at least 130°C, and even more preferably at least 140°C in order to enhance film stretchability.

The melting point peak temperature refers to a peak top temperature Tm of a crystalline melting peak in a DSC curve obtained by differential scanning calorimetry (DSC). The DSC curve is obtained by weighing about 5 mg of the resin which is the object of measurement and heating the weighed resin from 0 to 200°C at a rate of 10°C/min in a differential scanning calorimeter.

The polylactic acid resin (B) which exhibits a melting point peak temperature as described above is not limited to a particular resin and may be a commercially-available product. Specific examples include polylactic acid resins in which L-lactic acid accounts for 88 to 98% of the lactic acid units.

In order to enhance film stretchability, the melting point peak temperature of the polylactic acid resin (B) is preferably close to the melting point peak temperature of the poly(3-hydroxyalkanoate) resin (A). Specifically, the absolute value of the difference between the melting point peak temperature of the polylactic acid resin (B) and the melting point peak temperature of the poly(3-hydroxyalkanoate) resin (A) is preferably 40°C or less, more preferably 30°C or less, and even more preferably 20°C or less.

The melting point peak temperature of the poly(3-hydroxyalkanoate) resin (A) is measured in the same manner as the melting point peak temperature of the polylactic acid resin (B). When a plurality of melting point peaks appear in a DSC curve measured for the poly(3-hydroxyalkanoate) resin (A), the peak temperature of one of the melting point peaks that is observed in a higher temperature range than the other melting point peaks is defined as the melting point peak temperature of the poly(3-hydroxyalkanoate) resin (A).

The molecular weight of the polylactic acid resin (B) is not limited to a particular range, and may be set as appropriate. The number-average molecular weight of the polylactic acid resin (B) is preferably from $1 \times 10^3$ to $70 \times 10^4$ and more preferably from $1 \times 10^4$ to $30 \times 10^4$.

The lactic acid material used to produce the polylactic acid resin (B) is not limited to a particular type, and L-lactic acid, D-lactic acid, DL-lactic acid, or a mixture thereof may be used. Alternatively, L-lactide, D-lactide, meso-lactide, or a mixture thereof may also be used. Lactic acid obtained by microbial fermentation of a plant-derived renewable material such as starch can be suitably used.

The method for producing the polylactic acid resin (B) is not limited to a particular technique and may be any known method such as dehydration polycondensation or ring-opening polymerization.

In order to achieve both high film stretchability and high film biodegradability (in particular, biodegradability in compositing and marine degradability), the amount of the polylactic acid resin (B) in the stretched film according to the present embodiment is preferably from 10 to 50 wt% based on the total weight of the poly(3-hydroxyalkanoate) resin (A) and the polylactic acid resin (B). In terms of stretchability, the amount of the polylactic acid resin (B) is more preferably at least 15 wt% and even more preferably at least 20 wt%. In terms of biodegradability, the amount of the polylactic acid resin (B) is more preferably up to 40 wt%, even more preferably up to 30 wt%, still more preferably up to 25 wt%, and particularly preferably up to 20 wt%.

The stretched film according to the present embodiment is a resin film composed principally of the poly(3-hydroxyalkanoate) resin (A) and the polylactic acid resin (B). The total proportion of the poly(3-hydroxyalkanoate) resin (A) and the polylactic acid resin (B) in the total weight of the stretched film may be 50 wt% or more, and is preferably 70 wt% or more, more preferably 80 wt% or more, and even more preferably 90 wt% or more. The total proportion may be 95 wt% or more and may be 98 wt% or more.

(Additional Resin)

The stretched film according to the present embodiment may contain an additional resin other than the poly(3-hydroxyalkanoate) resin (A) and the polylactic acid resin (B), to the extent that the additional resin does not diminish the effect of the invention. Examples of such additional resins include: aliphatic polyester resins such as polybutylene succinate adipate, polybutylene succinate, and polycaprolactone; and aliphatic-aromatic polyester resins such as polybutylene adipate terephthalate, polybutylene sebacate terephthalate, and polybutylene azelate terephthalate. The stretched film may contain only one additional resin or may contain two or more additional resins.

The amount of the additional resin is not limited to a particular range, but is preferably 100 parts by weight or less, more preferably 50 parts by weight or less, and even more preferably 30 parts by weight or less per 100 parts by weight of the total amount of the poly(3-hydroxyalkanoate) resin (A) and the polylactic acid resin (B). The amount of the additional resin may be 10 parts by weight or less, 5 parts by weight or less, or 1 part by weight or less. The amount of the additional resin may be, but is not limited to, at least 0 part by weight.

The stretched film according to the present embodiment may contain an additive that can be used with the poly(3-hydroxyalkanoate) resin (A) and the polylactic acid resin (B), to the extent that the additive does not diminish the effect of the invention. Examples of such additives include: colorants such as pigments and dyes; odor absorbers such as activated carbon and zeolite; flavors such as vanillin and dextrin; and other additives such as fillers, plasticizers, oxidation inhibitors, antioxidants, weathering resistance improvers, ultraviolet absorbers, nucleating agents, lubricants, mold release agents, water-repellent agents, antimicrobial agents, and slidability improvers. The stretched film may contain only one additive or may contain two or more additives. The amounts of these additives can be set by those skilled in the art as appropriate depending on the intended purpose.

The following describes nucleating agents, lubricants, fillers, and plasticizers in detail.

(Nucleating Agent)

The stretched film according to the present embodiment may contain a nucleating agent. Examples of nucleating agents include: polyhydric alcohols such as pentaerythritol, galactitol, and mannitol; and other compounds such as orotic acid, aspartame, cyanuric acid, glycine, zinc phenylphosphonate, and boron nitride. Among these, pentaerythritol is preferred because it is particularly superior in the accelerating effect on crystallization of the poly(3-hydroxyalkanoate) resin (A). One nucleating agent may be used, or two or more nucleating agents may be used. The proportions of the nucleating agents used can be adjusted as appropriate depending on the intended purpose.

When a nucleating agent is used, the amount of the nucleating agent is not limited to a particular range, but is preferably from 0.1 to 5 parts by weight, more preferably from 0.5 to 3 parts by weight, and even more preferably from 0.7 to 1.5 parts by weight per 100 parts by weight of the total amount of the poly(3-hydroxyalkanoate) resin (A) and the polylactic acid resin (B).

However, the stretched film according to the present embodiment can be produced with high productivity even when the stretched film is substantially free of any nucleating agent such as pentaerythritol. The expression "substantially free of any nucleating agent" means that the nucleating agent amount is less than 0.1 parts by weight per 100 parts by weight of the total amount of the poly(3-hydroxyalkanoate) resin (A) and the polylactic acid resin (B). The nucleating agent amount may be less than 0.01 parts by weight. In an aspect in which the stretched film is substantially free of pentaerythritol, the problem of cast roll surface soiling due to bleed-out of pentaerythritol can be avoided.

(Lubricant)

The stretched film according to the present embodiment may contain a lubricant. Examples of lubricants include behenamide, oleamide, erucamide, stearamide, palmitamide, *N*-stearyl behenamide, *N*-stearyl erucamide, ethylene bis(stearamide), ethylene bis(oleamide), ethylene bis(erucamide), ethylene bis(lauramide), ethylene bis(capramide), *p*-phenylene bis(stearamide), and a polycondensation product of ethylenediamine, stearic acid, and sebacic acid. Among these, behenamide and erucamide are preferred because they are particularly superior in the lubricating effect on the poly(3-hydroxyalkanoate) resin (A). One lubricant may be used, or two or more lubricants may be used. The proportions of the lubricants used can be adjusted as appropriate depending on the intended purpose.

When a lubricant is used, the amount of the lubricant is not limited to a particular range, but is preferably from 0.01 to 5 parts by weight, more preferably from 0.05 to 3 parts by weight, and even more preferably from 0.1 to 1.5 parts by weight per 100 parts by weight of the total amount of the poly(3-hydroxyalkanoate) resin (A) and the polylactic acid resin (B). The stretched film according to the present embodiment preferably contains a lubricant, but may contain no lubricant.

(Filler)

The stretched film according to the present embodiment may contain a filler. The inclusion of a filler allows the stretched film to have higher strength. The filler may be an inorganic filler, an organic filler, or a combination of both. Examples of inorganic fillers include, but are not limited to, silicate salts, carbonate salts, sulfate salts, phosphate salts, oxides, hydroxides, nitrides, and carbon black. One inorganic filler may be used alone, or two or more inorganic fillers may be used in combination.

When a filler is used, the amount of the filler is not limited to a particular range, but is preferably from 1 to 100 parts by weight, more preferably from 3 to 80 parts by weight, even more preferably from 5 to 70 parts by weight, and still more preferably from 10 to 60 parts by weight per 100 parts by weight of the total amount of the poly(3-hydroxyalkanoate) resin (A) and the polylactic acid resin (B). However, the stretched film according to the present embodiment may be substantially free of any filler. The expression "substantially free of any filler" means that the filler amount is less than 1 part by weight per 100 parts by weight of the total amount of the resins (A) and (B). The filler amount may be less than 0.1 parts by weight.

(Plasticizer)

The stretched film according to the present embodiment may contain a plasticizer. Examples of plasticizers include glycerin ester compounds, citric ester compounds, sebacic ester compounds, adipic ester compounds, polyether ester compounds, benzoic ester compounds, phthalic ester compounds, isosorbide ester compounds, polycaprolactone compounds, and dibasic ester compounds. Among these, glycerin ester compounds, citric ester compounds, sebacic ester compounds, and dibasic ester compounds are preferred because they are particularly superior in the plasticizing effect on the poly(3-hydroxyalkanoate) resin (A). Examples of glycerin ester compounds include glycerin diacetomonolaurate. Examples of citric ester compounds include tributyl acetylcitrate. Examples of sebacic ester compounds include dibutyl sebacate. Examples of dibasic ester compounds include benzyl methyl diethylene glycol adipate. One plasticizer may be used, or two or more plasticizers may be used. The proportions of the plasticizers used can be adjusted as appropriate depending on the intended purpose.

When a plasticizer is used, the amount of the plasticizer is not limited to a particular range, but is preferably from 1 to 20 parts by weight, more preferably from 2 to 15 parts by weight, and even more preferably from 3 to 10 parts by weight per 100 parts by weight of the total amount of the poly(3-hydroxyalkanoate) resin (A) and the polylactic acid resin (B). However, the stretched film according to the present embodiment may be substantially free of any plasticizer. The expression "substantially free of any plasticizer" means that the plasticizer amount is less than 1 part by weight per 100 parts by weight of the total amount of the resins (A) and (B). The plasticizer amount may be less than 0.1 parts by weight.

[Stretched Film]

The stretched film according to the present embodiment is a stretched film that has been stretched in the MD direction and/or the TD direction after film molding.

In terms of thickness uniformity, appearance, strength, and low weight, the thickness of the stretched film according to the present embodiment is preferably from 10 to 200 $\mu$m, more preferably from 15 to 150 $\mu$m, and even more preferably from 20 to 100 $\mu$m.

The stretched film according to the present embodiment is preferably an industrially produced long stretched film, and particularly preferably a strip-shaped stretched film wound in a roll. The length of such a stretched film is not limited to a particular range, and may be, for example, 50 m or more and may be 100 m or more. According to the present embodiment, such a long stretched film can be produced continuously and stably.

In a preferred aspect, the stretched film according to an embodiment can exhibit an elastic modulus of 1500 MPa or more and a tensile strength at break of 40 MPa or more at least in the MD direction. The stretched film may be a biaxially-stretched film that exhibits an elastic modulus of 1500 MPa or more and a tensile strength at break of 40 MPa or more in both the MD and TD directions. The elastic modulus is preferably 2000 MPa or more and more preferably 2500 MPa or more. The tensile strength at break is preferably 60 MPa or more and more preferably 70 MPa or more. The elastic modulus and the tensile strength at break are measured by the methods described in detail in Examples below.

[Method for Producing Stretched Film]

Hereinafter, one example of a method for producing the stretched film according to the present embodiment will be described. The present invention is not limited by the following description.

First, a film raw material containing the poly(3-hydroxyalkanoate) resin (A), the polylactic acid resin (B), and optionally other components is melted.

The melting method is not limited to a particular technique. Preferably, the molten film raw material is extruded from a T-die; that is, extrusion molding is preferred. By extrusion molding, a film with a uniform thickness can be easily produced. The extrusion molding can be carried out using any suitable means such as a single-screw or twin-screw extruder.

The film raw material may be melted under any conditions under which the poly(3-hydroxyalkanoate) resin (A) and the polylactic acid resin (B) are melted. The temperature of the molten film raw material may be, for example, from about 140 to about 210°C.

Next, the molten film raw material is extruded onto a cast roll to mold the material into a film. The melt of the film raw material comes into contact with the cast roll and moves along the surface of the cast roll, thus becoming cooled and solidified.

This step may involve extruding the melt onto a single cast roll or onto a plurality of cast rolls, or may involve placing a touch roll facing a cast roll and pressing the melt extruded onto the cast roll between the touch roll and the cast roll.

An air knife or an air chamber may be used to ensure stable contact of the melt with the cast roll. The cast roll may be placed in a water bath, or an air chamber may be used, to efficiently cool the side of the melt opposite to the side in contact with the cast roll.

The set temperature of the cast roll is preferably at least 0°C, more preferably at least 10°C, and even more preferably at least 15°C in order to minimize the adhesiveness of the poly(3-hydroxyalkanoate) resin (A) and improve the separability of the film from the cast roll. The set temperature of the cast roll is preferably higher than a temperature that is 10°C above the glass transition temperature (Tg) of the poly(3-hydroxyalkanoate) resin (A).

The upper limit of the set temperature of the cast roll is not limited to a particular value. In order to accelerate the solidification of the poly(3-hydroxyalkanoate) resin (A), the set temperature of the cast roll is preferably up to 80°C and more preferably up to 60°C.

Next, the film cooled on the cast roll is transferred along with rotation of the cast roll, thereby separating the film from the cast roll. As a result, an unstretched film can be obtained.

The obtained film may be subsequently stretched in the MD direction to obtain a uniaxially stretched film having high strength in the MD direction. The MD direction is also referred to as the machine direction, flow direction, or longitudinal direction. The TD direction described later is a direction perpendicular to the MD direction, and is also referred to as the transverse direction or width direction.

The MD-direction stretching step can be performed in series with the separation from the cast roll on the same production line. This step is not limited to using a particular technique, and can be performed, for example, by using a roll longitudinal stretching machine including a plurality of rolls on which the film is transferred and by operating the plurality of rolls at different rotational speeds.

During the MD-direction stretching step, the film is preferably heated. The heating is not limited to using a particular technique, and examples of heating techniques include: a technique in which an air stream adjusted to a given temperature is applied to the film; a technique in which the film temperature is controlled by setting rolls to a given temperature; a technique in which the film temperature is controlled to a given temperature by heating the film using auxiliary heating means such as an IR heater; and a technique in which the film is passed through an oven adjusted to a given temperature. One of these techniques may be used alone, or two or more thereof may be used in combination.

According to Patent Literature 2, film stretching is accomplished by suppressing the resin crystallization during the MD-direction stretching step. For this purpose, Examples in the literature employ a relatively low film temperature of 20°C or 30°C. In contrast, in the present embodiment, such control of the film temperature is unnecessary because the film exhibits improved stretchability by virtue of the composition of the film raw material, and film stretching in the MD direction can be accomplished even at temperatures higher than those employed in Patent Literature 2.

Specifically, in the production of the stretched film according to the present embodiment, the temperature during MD-direction stretching is preferably 35°C or higher, more preferably 45°C or higher, and even more preferably 55°C or higher. Generally, polylactic acid resins have a glass transition temperature of around 60°C and, when rapidly cooled from a molten state, they do not readily crystallize but become amorphous. Thus, the stretched film according to the present embodiment can be readily softened in the above temperature range, which may be below the melting point of the poly(3-hydroxyalkanoate) resin, and successful stretching can be achieved. In addition, the above temperature conditions can be easily controlled and stabilized. This makes it possible to perform film stretching continuously and stably, thereby allowing for stable production of a long stretched film.

The upper limit of the temperature during MD-direction stretching is not limited to a particular value. In order to avoid breakage of the film during stretching, the temperature is preferably up to 110°C, more preferably up to 100°C, and even more preferably up to 90°C.

The stretch ratio in the MD direction is not limited to a particular range, but is preferably 2 or more. The stretch ratio is more preferably 2.5 or more and even more preferably 3 or more. Such high stretch ratios can be achieved by virtue of the composition of the film raw material according to the present embodiment. The upper limit of the stretch ratio is not limited to a particular value, and may be chosen as appropriate. For example, the stretch ratio may be up to 8.

The MD-direction stretching may be followed by stretching in the TD direction to obtain a biaxially-stretched film having high strength in both the MD and TD directions. The TD-direction stretching step can be carried out in series with the MD-direction stretching step on the same production line. This step is not limited to using a particular technique, and can be performed, for example, by using a transverse stretching machine such as a clip tenter to clamp the film at both width ends and pull the clamped film in the TD direction.

The film is preferably heated also during the TD-direction stretching step. The heating is not limited to using a particular technique, and any of the heating techniques described above for the MD-direction stretching step may be used.

The temperature conditions in the TD-direction stretching step need not be controlled within the specific temperature range disclosed in Patent Literature 2. Specifically, the temperature during TD-direction stretching may be set in the same manner as the temperature during MD-direction stretching, and is preferably from 35 to 110°C, more preferably from 45 to 100°C, and even more preferably from 55 to 90°C.

The stretch ratio in the TD direction is not limited to a particular range, but is preferably 2 or more. The stretch ratio is more preferably 3 or more and even more preferably 4 or more. Such high stretch ratios can be achieved by virtue of the composition of the film raw material according to the present embodiment. The upper limit of the stretch ratio is not limited to a particular value and may be chosen as appropriate. For example, the stretch ratio may be up to 8.

After the MD-direction or TD-direction stretching step, it is preferable to perform a heat setting step in which the stretched film is heated to a temperature that allows high-melting-point crystals to grow. This step can increase the crystallinity and hence the strength of the stretched film, and can stabilize the physical properties of the stretched film.

The heating temperature during heat setting is preferably from 80 to 150°C, more preferably from 90 to 135°C, and most preferably from 100 to 130°C. When the heating temperature is 80°C or higher, the crystallinity of the stretched film increases, and the resulting crystals can have a high melting point. When the heating temperature is 150°C or lower, breakage of the film due to melting can be avoided.

The heat setting can be carried out, for example, by heating the stretched film while maintaining its stretched state after TD-direction stretching performed using a transverse stretching machine such as a clip tenter. During this step, since the film thermally shrinks in the direction opposite to the stretch direction, relaxation is preferably performed to prevent breakage of the film. The relaxation is a procedure in which the film is allowed to retract in the direction opposite to the stretch direction. The amount of relaxation is preferably adjusted as appropriate between 5% and 30%.

Subsequently, the step of cooling the film may be performed as appropriate. Subsequently, the step of winding the stretched film onto a take-up roll is preferably performed.

In the stretched film production method according to the present embodiment, it is preferable to transfer the film continuously throughout all steps from melt extrusion to the final step. In this case, stretched film production with high productivity can be accomplished by an industrially simple process. The production method according to the present embodiment can be carried out while continuously winding the produced stretched film onto a take-up roll.

When the stretched film is continuously transferred, the transfer speed is not limited to a particular range. In terms of stretched film productivity, the transfer speed is preferably 5 m/min or higher before the start of stretching. In terms of production stability, the transfer speed is preferably 50 m/min or lower before the start of stretching.

[Laminate]

The stretched film according to the present embodiment may be a resin film consisting of a single self-supporting layer. Alternatively, a laminate may be formed by placing another layer on one or both sides of the stretched film. Such a laminate is also one aspect of the present invention.

Examples of the other layer include a resin layer, an inorganic layer, a metal layer, a metal oxide layer, and a printed layer. These other layers may be lamination layers, coating layers, or vapor-deposited layers.

The resin layer, which is one form of the other layer in the laminate, is not limited to a particular type. In order to enhance the biodegradability of the whole laminate, the resin layer is preferably a layer containing a poly(3-hydroxyalkanoate) resin (C). The poly(3-hydroxyalkanoate) resin (C) is not limited to a particular type and may be any of the poly(3-hydroxyalkanoate) resins described above for the poly(3-hydroxyalkanoate) resin (A). Components other than the poly(3-hydroxyalkanoate) resin (C) are not limited to particular materials, and any components known as additives for resin layers may be used. The resin layer may function as a heat-sealable layer.

[Applications of Stretched Film]

The stretched film according to the present embodiment can be suitably used as a packaging film, a heat-sealable film, or a twist film.

In the following items, preferred aspects of the present disclosure are listed. The present invention is not limited to the following items.

[Item 1] A stretched film containing:

a poly(3-hydroxyalkanoate) resin (A); and
a polylactic acid resin (B), wherein
the poly(3-hydroxyalkanoate) resin (A) includes a copolymer (A-1) that contains 3-hydroxybutyrate units and other hydroxyalkanoate units, in which a proportion of the other hydroxyalkanoate units is from 10 to less than 24 mol%, and that has a weight-average molecular weight of $70 \times 10^4$ or more, and
an amount of the copolymer (A-1) is from more than 20 to 75 wt% based on a total weight of the poly(3-hydroxyalkanoate) resin (A) and the polylactic acid resin (B).

[Item 2] The stretched film according to item 1, wherein the poly(3-hydroxyalkanoate) resin (A) further includes a copolymer (A-2) that contains 3-hydroxybutyrate units and other hydroxyalkanoate units and in which a proportion of the other hydroxyalkanoate units is from 1 to less than 10 mol%.

[Item 3] The stretched film according to item 1 or 2, wherein the other hydroxyalkanoate units include 3-hydroxyhexanoate units.

[Item 4] The stretched film according to any one of items 1 to 3, wherein an amount of the polylactic acid resin (B) is from 10 to 50 wt% based on the total weight of the poly(3-hydroxyalkanoate) resin (A) and the polylactic acid resin (B).

[Item 5] The stretched film according to any one of items 1 to 4, wherein the stretched film is substantially free of pentaerythritol.

[Item 6] The stretched film according to any one of items 1 to 5, wherein the stretched film exhibits an elastic modulus of 1500 MPa or more and a tensile strength at break of 40 MPa or more at least in an MD direction.

[Item 7] A laminate including:

the stretched film according to any one of items 1 to 6; and
a layer located on at least one side of the stretched film, the layer containing a poly(3-hydroxyalkanoate) resin (C).

**Examples**

Hereinafter, the present invention will be described more specifically with reference to Examples and Comparative Examples. The present invention is not limited by Examples in any respect.

In Examples, the following materials were used.

(Poly(3-Hydroxyalkanoate) Resin (A))
Poly(3-hydroxybutyrate-co-3-hydroxyhexanoate) (P3HB3HH) resins PHBH-1 to PHBH-3 listed below were used as P3HA resins (A). The term "3HB" as used below refers to 3-hydroxybutyrate repeating units, and "3HH" refers to 3-hydroxyhexanoate repeating units.

PHBH-1: P3HB3HH (average ratio 3HB/3HH = 94/11 (mol%/mol%), weight-average molecular weight = $80 \times 10^4$ g/mol)

This resin was produced according to the method described in an example (Raw material A-3) of WO 2013/147139 A1.

PHBH-2: P3HB3HH (average ratio 3HB/3HH = 94/6 (mol%/mol%), weight-average molecular weight = $60 \times 10^4$ g/mol)

This resin was produced according to the method described in Example 1 of WO 2019/142845 A1.

PHBH-3: P3HB3HH (average ratio 3HB/3HH = 94/11 (mol%/mol%), weight-average molecular weight = $50 \times 10^4$ g/mol)

This resin was produced according to the method described in an example (Raw material A-3) of WO 2013/147139 A1.

(Polylactic Acid Resin (B))

B-1: PLA (LX175 grade, manufactured by Total Corbion PLA)

(Nucleating Agent)

C-1: Pentaerythritol (Neulizer P, manufactured by Mitsubishi Chemical Corporation)

(Lubricant)

D-1: Behenamide (BNT-22H, manufactured by Nippon Fine Chemical Co., Ltd.)

[T-Die Film Moldability]

(Degree of Roll Soiling)

T-die films were obtained as follows: each resin composition was melted in a single-screw extruder having a screw diameter of 20 mm at 165°C, and was extruded from a die having a lip width of 250 $\mu$m onto a cast roll (CR) having a temperature of 40 to 60°C at a molding speed as indicated in Table 1. The degree of roll soiling in this film production was rated according to the criteria described below.

<Rating Criteria>

Good: The surface of the cast roll was visually inspected after 1-hour continuous operation, and any boundary between the area contacted by the film and the area not contacted by the film was not detected.
Poor: The surface of the cast roll was visually inspected after 1-hour continuous operation, and a boundary between the area contacted by the film and the area not contacted by the film was detected.

[Film Stretchability]

A film was produced from each resin composition using a T-die, and was stretched continuously to three times its original length in the MD direction (the flow direction during T-die film production). The stretching was performed using a roll stretching machine at a temperature ranging from 60 to 70°C. Ratings concerning the tolerable stretching limit (stretch ratio) were made according to the criteria described below.

Additionally, both longitudinal ends of the film stretched in the MD direction were fixed, and the film was stretched to five times its original width in the TD direction (perpendicular to the MD direction) at a temperature ranging from 70 to 80°C. Ratings concerning the tolerable stretching limit (stretch ratio) were made according to the criteria described below.

<Rating Criteria>

Good: The film did not break during stretching and was successfully processed into a stretched film. The resulting stretched film did not show any visually discernible sign of uneven stretching (an unevenly stretched area such as an area with non-uniform film thickness).

Poor: The film broke during stretching, or the resulting stretched film showed a visually discernible sign of uneven stretching (an unevenly stretched area such as an area with non-uniform film thickness).

[Film Physical Properties]

<Elastic Modulus, Tensile Strength at Break, and Elongation at Break of Film>

The stretched film was stored at 23°C and 50% humidity for one week, after which the film was tested according to JIS K 7113. Specifically, the film was punched to give 10 dumbbell specimens (Type 2 (1/3) small-sized test specimens) in the MD direction and/or the TD direction, and the specimens were tested for elastic modulus, tensile strength at break, and elongation at break using a tensile tester ("AUTOGRAPH AG2000A" manufactured by Shimadzu Corporation) at a test speed of 100 mm/min. The measurement and calculation were performed five times, and the averaged values are shown as "Elastic modulus", "Tensile strength at break", and "Elongation at break" in Table 1.

<Tear Strength of Film>

The stretched film was stored at 23°C and 50% humidity for one week, after which the film was tested for tear strength using the Elmendorf tear method according to JIS K 1281. The measurement was performed five times, and the averaged value is shown as "Tear strength" in Table 1.

(Example 1)

(Method for Producing Resin Composition)

Fifty parts by weight of poly(3-hydroxyalkanoate) resin PHBH-1 and 50 parts by weight of PHBH-2 were dry-blended with 0.5 parts by weight of D-1 as a lubricant. The resulting resin material was fed into the hopper of a 26-mm-diameter corotating twin-screw extruder whose cylinder temperature and die temperature were set to 150°C. The resin material was melted and kneaded in the extruder and extruded as a strand through the die. The extruded strand was solidified by passing it through a water bath filled with 45°C hot water. The solidified strand was cut using a pelletizer to obtain resin pellets P-1.

(Production of Stretched Film)

The resin pellets P-1 and the resin B-1 were fed into a single screw extruder at a weight ratio of 80:20, and the resin mixture was extruded as a film through a T-die. The molded film was cooled on a cooling roll at a set temperature of 50°C, and the cooled film was taken up onto a take-up roll and continuously stretched in the MD direction using a roll longitudinal stretching machine at a stretch temperature of 60 to 70°C and a stretch ratio of 3. After that, the film was continuously stretched in the TD direction using a transverse stretching machine (clip tenter) at a stretch temperature of 70 to 80°C and a stretch ratio of 5, and was subsequently subjected to heat setting by heating to 130°C while the stretching was relaxed by 15%. The film subjected to the biaxial stretching was cooled to 50°C, and the width ends of the cooled film were cut off to obtain a biaxially-stretched film having a width of 1200 mm and a thickness of 20 μm. The above processes were carried out successively.

The degree of roll soiling was evaluated after 1-hour continuous operation following the start of T-die film production. The stretchability of the film was also evaluated by inspecting it after the MD-direction stretching and after the TD-direction stretching. In addition, the elastic modulus, tensile strength at break, elongation at break, and tear strength of the resulting stretched film were evaluated. The evaluation results are shown in Table 1.

(Example 2)

Resin pellets P-2 were produced in the same manner as the resin pellets of Example 1, except that the formulation was changed as shown in Table 1. Film production was also carried out in the same manner as in Example 1. The degree of roll soiling and the film stretchability were evaluated, and the elastic modulus, tensile strength, tensile strength at break, elongation at break, and tear strength of the stretched film were also evaluated. The evaluation results are shown in Table 1.

In Example 1, the maximum molding speed at which film molding was accomplished without sticking of the resin material to the cast roll was 8 m/min, whereas the maximum molding speed was 15 m/min in Example 2.

(Comparative Examples 1 to 5)

Resin pellets P-3 to P-7 were produced in the same manner as the resin pellets of Example 1, except that the formulation was changed as shown in Table 1. Film production was attempted in the same manner as in Example 1. However, the film was unevenly stretched, or broke during stretching, and no stretched film was obtained. In Comparative Example 4, no film was obtained because the molten film did not solidify on the cast roll, but became stuck to and inseparable from the cast roll even when the molding speed was reduced below 1 m/min.

[Table 1]

| Formulation | | | Unit | Ex. 1 | Ex. 2 | Comp. 1 | Comp. 2 | Comp. 3 | Comp. 4 | Comp. 5 |
|---|---|---|---|---|---|---|---|---|---|---|
| Formulation | P3HA (A) | PHBH-1 (HH: 11 mol/Mw = 80 × 10$^4$) | wt% | 40 | 32 | | | | 50 | |
| | | PHBH-2 (HH: 6 mol) | wt% | 40 | 48 | 80 | 80 | 100 | 50 | 40 |
| | | PHBH-3 (HH: 11 mol/Mw = 50 × 10$^4$) | wt% | | | | | | | 40 |
| | PLA (B) | PLA LX175 | wt% | 20 | 20 | 20 | 20 | 0 | 0 | 20 |
| | Nucleating agent | PETL | parts by weight | 0 | 0 | 0 | 1 | 1 | 0 | 0 |
| | Lubricant | BA | parts by weight*1 | 0.5 | 0.5 | 0.5 | 0.5 | 0.5 | 0.5 | 0.5 |
| Evaluation results | T-die film moldability | Degree of roll soiling | | Good | Good | Good | Poor | Poor | Good | Good |
| | | Molding speed | m/min | 8 | 15 | 18.5 | 18.5 | 15 | Molding failed | 8 |
| | Film stretchability | MD stretching, 3 times@60-70°C | | Good | Good | Poor | Poor | Poor | Poor | Poor |
| | | TD stretching, 5 times @70-80°C | | Good | Good | - | - | - | - | - |
| | Stretched film physical properties | Elastic modulus [MD/TD] | MPa | 2348/1895 | 2650/2044 | - | - | - | - | - |
| | | Tensile strength [MD/TD] | MPa | 60/56 | 86/113 | - | - | - | - | - |
| | | Elongation at break [MD/TD] | % | 85/45 | 145/103 | - | - | - | - | - |
| | | Tear strength [MD/TD] | mN/μm | 3/3 | 3/3 | - | - | - | - | - |
| *1) Parts by weight per 100 parts by weight of P3HA | | | | | | | | | | |

Table 1 reveals that in Examples 1 and 2, where the poly(3-hydroxyalkanoate) resins (A) including PHBH-1 corresponding to the copolymer (A-1) were blended with the polylactic acid resin (B), biaxially-stretched films stretched at high stretch ratios in both the MD and TD directions were successfully obtained.

In contrast, in Comparative Examples 1 and 2, where the film contained the poly(3-hydroxyalkanoate) resin (A) and the polylactic acid resin (B) but did not contain the copolymer (A-1), the film broke during the stretching step, and no stretched film was obtained. The same was true for Comparative Example 3 where the film contained neither the copolymer (A-1) nor the polylactic acid resin (B) and Comparative Example 5 where a copolymer containing the same proportion of 3HH as the copolymer (A-1) and having a weight-average molecular weight of less than $70 \times 10^4$ was used instead of the copolymer (A-1).

In Comparative Example 4, where the film contained the copolymer (A-1) but did not contain the polylactic acid resin (B), the film material readily stuck to the cast roll, and no film was produced.

In Comparative Examples 2 and 3, where pentaerythritol was added, roll soiling was found.

## Claims

1. A stretched film comprising:

   a poly(3-hydroxyalkanoate) resin (A); and
   a polylactic acid resin (B), wherein
   the poly(3-hydroxyalkanoate) resin (A) comprises a copolymer (A-1) that comprises 3-hydroxybutyrate units and other hydroxyalkanoate units, in which a proportion of the other hydroxyalkanoate units is from 10 to less than 24 mol%, and that has a weight-average molecular weight of $70 \times 10^4$ or more, and
   an amount of the copolymer (A-1) is from more than 20 to 75 wt% based on a total weight of the poly(3-hydroxyalkanoate) resin (A) and the polylactic acid resin (B).

2. The stretched film according to claim 1, wherein the poly(3-hydroxyalkanoate) resin (A) further comprises a copolymer (A-2) that comprises 3-hydroxybutyrate units and other hydroxyalkanoate units and in which a proportion of the other hydroxyalkanoate units is from 1 to less than 10 mol%.

3. The stretched film according to claim 1 or 2, wherein the other hydroxyalkanoate units comprise 3-hydroxyhexanoate units.

4. The stretched film according to claim 1 or 2, wherein an amount of the polylactic acid resin (B) is from 10 to 50 wt% based on the total weight of the poly(3-hydroxyalkanoate) resin (A) and the polylactic acid resin (B).

5. The stretched film according to claim 1 or 2, wherein the stretched film is substantially free of pentaerythritol.

6. The stretched film according to claim 1 or 2, wherein the stretched film exhibits an elastic modulus of 1500 MPa or more and a tensile strength at break of 40 MPa or more at least in an MD direction.

7. A laminate comprising:

   the stretched film according to claim 1 or 2; and
   a layer located on at least one side of the stretched film, the layer comprising a poly(3-hydroxyalkanoate) resin (C).

## INTERNATIONAL SEARCH REPORT

| International application No. |
| --- |
| **PCT/JP2024/021070** |

| A. | CLASSIFICATION OF SUBJECT MATTER |
| --- | --- |

*C08J 5/18*(2006.01)i; *B32B 27/36*(2006.01)i; *C08L 67/04*(2006.01)i; *C08L 101/16*(2006.01)i
FI:   C08J5/18 CFD; C08L67/04; C08L101/16; B32B27/36

According to International Patent Classification (IPC) or to both national classification and IPC

| B. | FIELDS SEARCHED |
| --- | --- |

Minimum documentation searched (classification system followed by classification symbols)

C08J5/18; B32B27/36; C08L67/04; C08L101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2010/002205 A2 (SKC CO., LTD.) 07 January 2010 (2010-01-07) claims, p. 5, line 25 to p. 11, line 10, examples | 1, 3-6 |
| Y | | 2 |
| X | CN 116178915 A (TORAY ADVANCED MATERIALS RESEARCH LABORATORIES (CHINA) CO., LTD.) 30 May 2023 (2023-05-30) claims, paragraphs [0010], [0021], [0022], [0052], [0063]-[0109], examples, particularly, examples 1-3, 5-11 | 1, 3-7 |
| Y | | 2 |
| Y | JP 2022-62759 A (KANEKA CORP.) 21 April 2022 (2022-04-21) claims, paragraphs [0023]-[0031], [0061]-[0069], examples | 2 |
| A | JP 10-147653 A (GUNZE LIMITED) 02 June 1998 (1998-06-02) claims, examples | 1-7 |

✓ Further documents are listed in the continuation of Box C.       ✓ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 August 2024** | **20 August 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 733 347 A1**

## INTERNATIONAL SEARCH REPORT

| International application No. |
|---|
| **PCT/JP2024/021070** |

**C. DOCUMENTS CONSIDERED TO BE RELEVANT**

| Category* | Citation of document, with indication, where appropriate, of the relevant passages | Relevant to claim No. |
|---|---|---|
| A | CN 116178917 A (TORAY ADVANCED MATERIALS RESEARCH LABORATORIES (CHINA) CO., LTD.) 30 May 2023 (2023-05-30)<br>claims, examples | 1-7 |
| A | JP 10-006445 A (DAI NIPPON PRINTING CO., LTD.) 13 January 1998 (1998-01-13)<br>claims, examples | 1-7 |
| A | CN 115058108 A (BEIJING BLUEPHA MICROBIOLOGY TECHNOLOGY CO., LTD.) 16 September 2022 (2022-09-16)<br>claims, examples | 1-7 |
| A | JP 2013-057039 A (KANEKA CORP.) 28 March 2013 (2013-03-28)<br>claims, examples | 1-7 |

Form PCT/ISA/210 (second sheet) (July 2022)

18

## INTERNATIONAL SEARCH REPORT
### Information on patent family members

International application No.

**PCT/JP2024/021070**

| Patent document cited in search report | | | Publication date (day/month/year) | Patent family member(s) | | | Publication date (day/month/year) |
|---|---|---|---|---|---|---|---|
| WO | 2010/002205 | A2 | 07 January 2010 | KR 10-2010-0004420 | A | | |
| CN | 116178915 | A | 30 May 2023 | (Family: none) | | | |
| JP | 2022-62759 | A | 21 April 2022 | (Family: none) | | | |
| JP | 10-147653 | A | 02 June 1998 | (Family: none) | | | |
| CN | 116178917 | A | 30 May 2023 | (Family: none) | | | |
| JP | 10-006445 | A | 13 January 1998 | (Family: none) | | | |
| CN | 115058108 | A | 16 September 2022 | WO 2023/245997<br>claims, examples<br>EP 4357417 | A1<br><br>A1 | | |
| JP | 2013-057039 | A | 28 March 2013 | (Family: none) | | | |

Form PCT/ISA/210 (patent family annex) (July 2022)

## REFERENCES CITED IN THE DESCRIPTION

**Patent documents cited in the description**

- JP 2022062759 A
- JP 2023073820 A
- WO 2013147139 A1
- WO 2019142845 A1

**Non-patent literature cited in the description**

- **T. FUKUI** ; **Y. DOI**. *J. Bacteriol.*, 1997, vol. 179, 4821-4830